# EUROPEAN PATENT SPECIFICATION

(11) **EP 0 499 325 B1**
(45) Date of publication and mention of the grant of the patent: **18.10.1995**
(21) Application number: 92200370.2
(22) Date of filing: 10.02.1992
(51) Int. Cl.: F24C 15/32, A21B 1/26

(54) **Hot air oven**
Heissluftofen
Four à air chaud

(30) Priority: 11.02.1991 BE 9100122
(43) Date of publication of application: 19.08.1992
(73) Proprietor: ATAG Keukentechniek B.V., 7071 CH Ulft (NL)
(72) Inventor: Gerritsen, Jan, NL-7121 JM Aalten (NL)
(74) Representative: 't Jong, Bastiaan Jacobus

(56) References cited:
- EP-A- 0 383 366
- DE-A- 2 857 126
- DE-A- 3 508 747
- GB-A- 2 136 110
- US-A- 4 155 294
- US-A- 4 295 419
- US-A- 4 722 683

## Description

The invention relates to an oven as defined in the introductory part of claim 1.

Such an oven is known from US-A-4 155 294. In this known oven the foodstuff to be heated is received in a rotatable apertured cage and rotated in the oven space so as to obtain a uniform heating of the foodstuff.

The invention has for its object to provide an oven of the type specified in which a very uniform heating can be achieved in a structurally simple way.

This is achieved in the oven according to the invention with the measures as characterized in claim 1. The air displaced by the fan is blown out uniformly into the oven space. Due to the uniform outflow and because eddying only occurs in the blown-out air to a limited extent the whole oven space is well flushed. Substantially all air present in the oven space participates equally in the circulation so that a uniform heating through the whole oven space is ensured.

An additional advantage of the invention is that a fan having a power markedly smaller than those of the known ovens is sufficient to obtain a good air circulation through the whole oven space.

A further advantage is that the oven space of the oven according to the invention can have a large volume. Due to the good control of the air flow obtained with the invention a good result is also achieved with large ovens.

The embodiment of claim 2 is preferably applied. Thus achieved is that the tendency of the air to eddy in the oven space is hereby further limited and all outflowing air flows in principle in a horizontal plane back to the intake opening. All outflowing air hereby remains for the most part in the oven space for the same amount of time.

Achieved in favourable manner with the step of claim 3 is that a uniform air flow also occurs even very close to the intake opening.

Another possibility for a uniform intake over the whole height is characterized in claim 4. By adjusting sufficient pressure fall over the elongate openings a uniform intake can be obtained over the whole height. The elongate inlet opening can of course also have a width varying over the height in order to obtain uniform intake over the height.

When the step of claim 5 is further applied the strength of the air flow in the oven space can be adjusted in accordance with the intended use of the oven without the uniformity of the air flow being reduced.

According to a very favourable further development of the oven according to the invention a water atomizer is arranged which debouches in the air channel between the rotor and the heating means. Due to the uniform air flow obtained with the invention, wherein all air displaced by the rotor flows in well controlled manner through the air channel, water injected into the air channel is absorbed in very uniformly distributed manner into the air. The atomized water is strongly heated when it passes the heating means and evaporates. It has hereby become possible with a comparatively simple development of the oven according to the invention to bake and fry food products at high temperatures of 150-250°C and to boil, poach and braise at temperatures of about 100°C and lower. The water vapour herein transfers heat to the food dishes by condensation.

The moisture loss of the products during preparation can also be countered by the added water.

It is noted that it is per se known with circulation ovens to inject steam from outside. A separate steam generating unit is however required for this purpose. Also known are circulation ovens into which a limited amount of moisture is injected by means of a sprayer in order to obtain a higher air humidity.

The step of claim 7 is preferably applied in the use of a water atomizer. Good operation of the oven according to the invention is hereby assured over a large temperature range.

From GB-A-2 136 110 a hot air oven is known in which the hot air from the fan is guided through air shafts in opposing side walls. The air is expelled from the air shafts through openings in the opposing side walls. Also US-A-4 722 683 shows a hot air oven with double side walls through which the hot air is expelled. The hot air oven shown in DE-A-3 508 747 is provided with air guiding means supplying hot air in the upper portion of the oven space and exhausting in a lower portion or vice versa.

The invention is further elucidated in the following description with reference to a number of embodiments of an oven according to the invention.

Fig. 1 shows in partly broken away perspective view an oven as according to a preferred embodiment of the invention.

Fig. 2 shows a cross section along II-II in fig. 1.

Fig. 3 shows an alternative embodiment of an oven according to the invention.

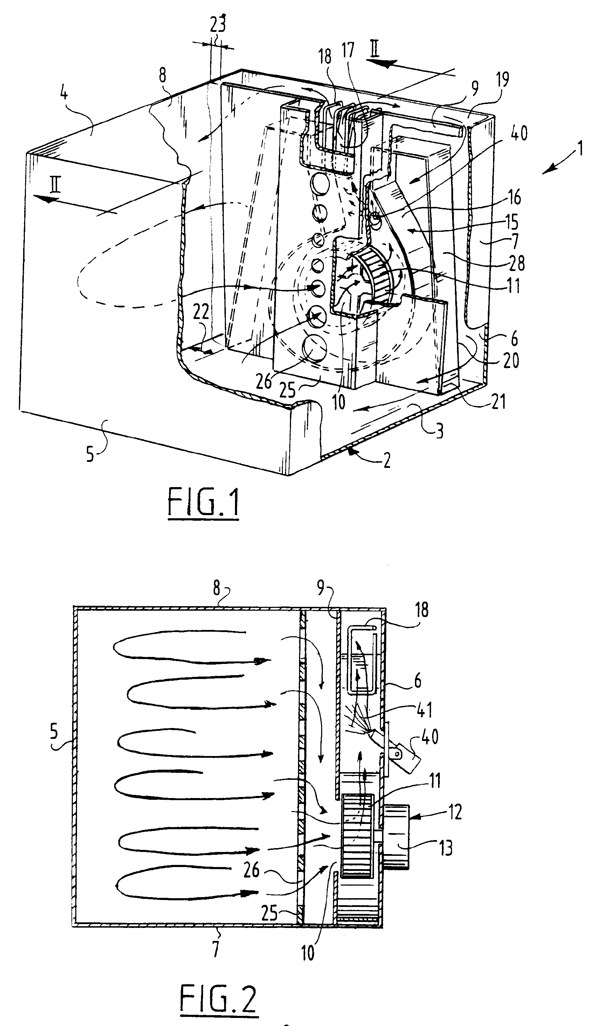

The oven 1 shown in fig. 1 comprises a box-like frame 2 with a bottom 3, upper wall 4, front wall 5, rear wall 6 and side walls 7, 8. The front wall 5 is normally embodied as a door, although it is not drawn as such in the figures for the sake of simplicity.

Arranged at an interval from the rear wall 6 is a partition wall 9. Formed at a central position in the partition wall 9 is an intake opening 10. A rotor 11 of a fan 12 is mounted behind the intake opening 10. The motor 13 of fan 12 is fixed on the outside against the rear wall 6.

Arranged around the rotor 11 in the space defined between the partition wall 9 and the rear wall 6 are air guiding means which are generally designated with 15. These air guiding means guide the air displaced by the rotor 11 uniformly to the blow-out openings, as yet to be described in detail, close to the side walls 7, 8.

In the preferred embodiment of the oven according to the invention shown in fig. 1 the air guiding means 15 form a so-called spiral casing 16. This latter connects onto an air channel 17 through which is guided all air displaced by the rotor. The air channel 17 divides at the top into an air distribution channel 19 that leads to either side of the oven.

Arranged in the air channel 17 and partially in air distribution channel 19 is a heating element 18 which heats the through-flowing air. This heating element 18 may be an electrical heating element but may also comprise a gas burner or a gas-fuelled heat exchanger.

The air distribution channel 19 runs out on either side of the opening, close to the side walls 7, 8, into outflow channels 20. As can be seen in fig. 1, these outflow channels are defined by the rear wall 6, the side walls 7 or 8 and a plate-like element 28 forming part of the air guiding means. The plate 28 is disposed at an inclination relative to side wall 7 of the oven so that the outflow channel 20 has a decreasing section in the flow direction of the air. The side edge 21 of the partition wall 9 stands at an inclination relative to side wall in opposing sense. The blow-out openings defined between the edge 21 of the partition wall and the opposite side wall 7, 8 thus have an opening size increasing in the flow direction of the air. This is shown in fig. 1 on the left-hand side of partition wall 9 with the breadth designations 22 and 23.

With a correct dimensioning of the cross section of the outflow channel 20 the side edge of the partition wall can have a constant distance to the side wall while a uniform outflow over the whole height is nevertheless achieved. A constant width of the elongate opening has the advantage of simple manufacture and a better appearance.

The suitably dimensioned section of the outflow channel decreasing in the flow direction results in the occurrence of a virtually uniform outflow of air at equal speed over the entire height. The blown out air will thereby move in the first instance horizontally parallel to the side wall so that it penetrates into the oven space close to the front wall 5 and, turning back therefrom, flows back to the intake opening 10.

Arranged in front of the intake opening 10 in the preferred embodiment of fig. 1 is an intake box 25 which defines an air inflow channel having inlet openings 26 extending over the height of the oven space. The size of openings 26 decreases in the direction towards the intake opening. At the height of the intake opening 10 of fan 12 the openings 26 therefore have a relatively small diameter and upward and downward thereof the diameters of the openings increase. Thus achieved is that a virtually identical flow is drawn in through each opening 26 so that a similar intake prevails at each height in the oven space. The air flowing uniformly out of the blow-out openings can therefore flow back uniformly once again to the intake openings 26 without any significant vertical air displacement occurring to disturb the uniform flow.

As noted above, the heating element 18 is arranged in the air channel 17 so that all air displaced by rotor 11 flows along the heating element 18. In addition to a good heating of the air this also results of course in a good cooling of the heating element 18 so that the heating element 18 will have a long useful life.

As shown in fig. 1 and 2, a water atomizer 40 is arranged which debouches in the air channel 17 between rotor 11 and heating element 18. Water 41 can be injected into the air channel 17 with this atomizer 40. This finely atomized water is carried along with the air, is heated by the heating element 18 and evaporates. The uniform air flow in the oven according to the invention results in an even distribution of the heated water vapour.

The atomizer 40 can be activated at both high and low oven temperatures.

At temperatures between 50°C and 125°C food dishes can therein be boiled, poached or braised in the oven. Due to the uniform air flow and because all air is guided through the air channel and along the heating means, sufficient steam can still be generated at such relatively low temperatures to enable use of the said methods of preparation.

At higher temperatures water can be injected in order to obtain a higher air humidity during the baking process, for example for making dough rise or to limit moisture loss during frying of meat.

The atomizer 40 is controlled in appropriate manner subject to the set oven temperature, for instance by intermittent switch-on, in order to inject as much water as can be effectively heated at the set temperature.

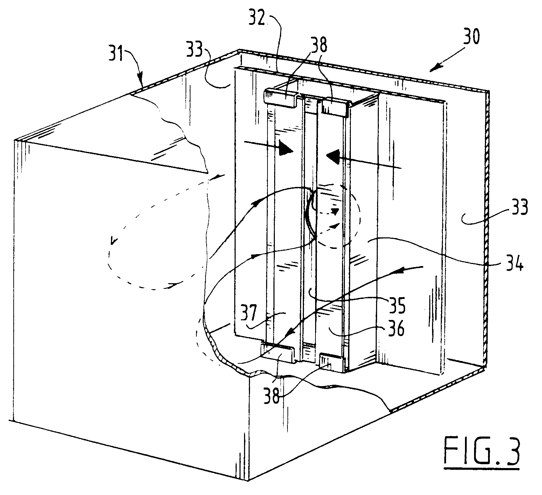

The oven 30 shown in fig. 3 likewise has a box-like frame 31 in which an oven space is defined. Straight elongate outflow openings 33 are formed on the end edges of the partition wall 32. The air guiding means which are arranged in the space between the partition wall 32 and the rear wall and which guide the air displaced by the rotor uniformly to the blow-out openings 33 are not further shown here. Shown more specifically is the intake box 34. In this intake box 34 the inlet is formed by an elongate opening 35. This latter is defined in the shown preferred embodiment between edges of plate parts 36, 37 which are received slidably in guidings 38. By sliding the slide plates 36, 37 towards one another the elongate opening width is reduced so that the air flow into the oven can in this way be decreased. By effecting a sufficient pressure fall over the elongate inlet opening 35 a uniform intake over the whole height is ensured. Instead of slide plates 36, 37 with straight side edges slide plates can also be used having for instance an upward and downward curved end edge. An elongate opening width between the slide plates 36, 37 increasing with the distance to the intake opening of the fan is then again obtained so that a uniform intake can also be achieved when there is a small pressure fall over the elongate opening. The adjustability of the slide plates will generally only be desired for exceptional purposes. For standard embodiments of the oven according to the invention a form of the inlet opening established in tests can be formed fixedly in the intake box.

## Claims

1. Oven (1) comprising a box-like frame (2), top (4), bottom (3) and side walls (5, 6, 7, 8) thereof defining an oven space, a partition wall (9) arranged at a distance from a side wall (6) and provided at a central position with an intake opening (10) and wherein behind the intake opening is arranged a rotor (11) of a radial fan (12) mounted on the frame (2), arranged around the rotor (11) are air guiding means (15) defining a spiral casing (16) round the rotor and forming an air channel (17) guiding air displaced by the rotor (11) and air distribution means (19) connected to the air channel (17) and guiding air to blow-out openings, and comprising heating means (18) arranged in the air channel for heating air circulated by the fan (12), **characterized in that** the rotor (11) is arranged immediately behind the intake opening (10) in the partition wall (9), the blow-out openings are provided close to the edges of the partition wall (9), and in that the air distribution means (19) define outflow channels (20) located on opposite side walls having a section decreasing in the flow direction of the air and wherein the blow-out openings are arranged over the length of the outflow channels (20).

2. Oven as claimed in claim 1, wherein the blow-out openings have an opening size increasing in the flow direction.

3. Oven as claimed in claim 1 or 2, wherein the intake opening (10) connects onto an air inflow channel having an inlet (26) which extends over the height of the oven space and whereof the opening size decreases in the direction towards the intake opening.

4. Oven as claimed in any of the foregoing claims, wherein the intake opening (10) connects onto an air inflow channel having an elongate inlet opening (35) extending over the height of the oven space.

5. Oven as claimed in claim 4, wherein the elongate inlet opening (35) is formed between edges of plate parts (36, 37) of which at least one is displaceable relative to the other for adjusting the elongate opening (35) width.

6. Oven as claimed in any of the foregoing claims, wherein a water atomizer (40) is arranged which debouches in the air channel between the rotor (11) and the heating means (18).

7. Oven as claimed in claim 6, wherein the water atomizer (40) is operated by a control device which can activate the atomizer intermittently or continuously in accordance with the set temperature of the oven such that a quantity of water is injected as can be effectively heated at the set temperature.

## Patentansprüche

1. Ofen (1) mit einem kastenartigen Rahmen (2), wobei eine obere (4), eine untere (3) und Seitenwände (5, 6, 7, 8) davon einen Ofenraum abgrenzen, einer Unterteilungswand (9), die in einem Abstand von einer Seitenwand (6) angeordnet ist und an einer mittleren Position mit einer Einlaßöffnung (10) versehen ist und bei der hinter der Einlaßöffnung ein Rotor (11) eines Radiallüfters (12) angeordnet ist, der an dem Rahmen (2) angebracht ist, wobei um den Rotor (11) Luftleitmittel (15) angeordnet sind, die ein Spiralgehäuse (16) um dem Rotor abgrenzen und einen Luftkanal 17 bilden, der durch den Rotor (11) verdrängte Luft leitet, und Luftverteilungsmittel (19), die mit dem Luftkanal (17) verbunden sind und Luft zu Ausblasöffnungen leiten, und mit einem Heizmittel (18), das in dem Luftkanal zum Erwärmen von durch den Lüfter (12) zirkulierter Luft angeordnet ist,
dadurch gekennzeichnet, daß der Rotor (11) unmittelbar hinter der Einlaßöffnung (10) in der Unterteilungswand (9) angeordnet ist, die Ausblasöffnungen nahe zu den Kanten der Unterteilungswand (9) vorgesehen sind und daß die Luftverteilungsmittel (19) Ausflußkanäle (20) abgrenzen, die an gegenüberliegenden Seitenwänden mit einem Querschnitt angeordnet sind, der sich in der Flußrichtung der Luft verringert, und wobei die Ausblasöffnungen über die Länge der Ausflußkanäle (20) angeordnet sind.

2. Ofen nach Anspruch 1, bei dem die Ausblasöffnungen eine Öffnungsgröße aufweisen, die sich in Flußrichtung vergrößert.

3. Ofen nach Anspruch 1 oder 2, bei dem die Einlaßöffnung (10) mit einem Lufteinflußkanal mit einem Einlaß verbunden ist, der sich über die Höhe des Ofenraumes erstreckt und von dem die Öffnungsgröße sich in die Richtung zu der Einlaßöffnung verringert.

4. Ofen nach einem der vorhergehenden Ansprüche, bei dem die Einlaßöffnung (10) mit einem Lufteinflußkanal verbunden ist, der eine längliche Einlaßöffnung (35) aufweist, die sich über die Höhe des Ofenraumes erstreckt.

5. Ofen nach Anspruch 4, bei dem die längliche Einlaßöffnung (35) zwischen Kanten von Plattenteilen (36, 37) gebildet ist, von denen mindestens eine relativ zu der anderen zum Einstellen der länglichen Öffnungsbreite verschiebbar ist.

6. Ofen nach einem der vorhergehenden Ansprüche, bei dem ein Wasserzerstäuber (40) vorgesehen ist, der in den Luftkanal zwischen dem Rotor (11) und dem Heizmittel (18) mündet.

7. Ofen nach Anspruch 6, bei dem der Wasserzerstäuber (40) durch eine Steuereinrichtung betätigt wird, die den Zerstäuber unterbrochen oder kontinuierlich gemäß der eingestellten Temperatur des Ofens derart aktivieren kann, daß solche eine Wassermenge injiziert wird, die effektiv bei der eingestellten Temperatur erwärmt werden kann.

## Revendications

1. Four (1) comprenant un bâti (2) en forme de boîte, une partie supérieure (4), un fond (3) et des parois latérales (5, 6, 7, 8) de celui-ci définissant un espace de four, une paroi (9) de séparation agencée à une distance d'une paroi latérale (6) et munie à une position centrale d'une ouverture d'entrée (10) et dans lequel derrière l'ouverture d'entrée est agencé un rotor (11) d'un ventilateur (12) radial monté sur le bâti (2) autour du rotor (11), sont agencés des moyens (15) de guidage d'air définissant une gaine (16) en spirale autour du rotor et formant un canal (17) d'air guidant de l'air déplacé par le rotor (11) et des moyens (19) de distribution d'air reliés au canal d'air (17) et guidant de l'air vers les ouvertures d'éjection, et comprenant des moyens de chauffage (18) agencés dans le canal d'air pour chauffer de l'air mis en circulation par le ventilateur (12), caractérisé en ce que le rotor (11) est agencé immédiatement derrière l'ouverture d'entrée (10) dans la paroi de séparation (9), les ouvertures d'éjection sont prévues proches des bords de la paroi de séparation (9) et en ce que les moyens (19) de distribution d'air définissent des canaux (20) d'éjection situés sur des parois latérales opposées ayant des diminutions de section dans la direction de circulation de l'air et dans lesquels les ouvertures d'éjection sont agencées sur la longueur des canaux (20) d'éjection.

2. Four selon la revendication 1, dans lequel les ouvertures d'éjection ont une taille d'ouverture augmentant dans le sens de circulation.

3. Four selon la revendication 1 ou 2, dans lequel l'ouverture (10) d'entrée se connecte sur un canal d'entrée d'air ayant une entrée (26) qui s'étend sur la hauteur de l'espace du four et dont la taille d'ouverture diminue dans la direction vers l'ouverture d'entrée.

4. Four selon l'une quelconque des revendications précédentes, dans lequel l'ouverture d'entrée (10) se connecte sur un canal d'entrée d'air ayant une ouverture (35) d'entrée allongée s'étendant sur la hauteur de l'espace de four.

5. Four selon la revendication 4, dans lequel l'ouverture (35) d'entrée allongée est formée entre des bords de parties en plaque (36, 37) parmi lesquelles au moins l'une est déplaçable par rapport à l'autre pour ajuster la largeur de l'ouverture (35) allongée.

6. Four selon l'une quelconque des revendications précédentes, dans lequel un atomiseur d'eau (40) est agencé qui débouche dans le canal d'air entre le rotor (11) et les moyens (18) de chauffage.

7. Four selon la revendication 6, dans lequel l'atomiseur d'eau (40) est commandé par un dispositif de commande qui peut actionner l'atomiseur de manière intermittente ou continue en fonction de la température réglée du four de telle sorte qu'une quantité d'eau soit injectée quand elle peut être effectivement chauffée à la température réglée.
